# DEMANDE DE BREVET EUROPEEN

(11) **EP 1 270 968 A1**
(43) Date de publication de la demande: **02.01.2003**
(21) Numéro de dépôt: 02291558.1
(22) Date de dépôt: 21.06.2002
(51) Int. Cl.: F16C 9/04

(54) **Bielle de transmission**

(30) Priorité: 25.06.2001 FR 0108317
(71) Demandeur: Renault s.a.s., 92100 Boulogne Billancourt (FR)
(72) Inventeur: Bertin, Luc, 78820 Juziers (FR); Chevaleyre, Frédéric, 94120 Fontenay sous Bois (FR)

(57) **Abrégé**

L'invention propose une bielle (10) de transmission du mouvement de translation d'un piston d'un moteur à combustion à un vilebrequin, du type qui comporte une tête (12) qui est réalisée en une seule pièce et qui comporte deux amorces (36, 38) de rupture sur sa paroi (20) tubulaire interne qui sont destinées à déterminer deux zones (40, 42) de rupture pour séparer un chapeau supérieur (26) et un corps (16) qui, lorsqu'ils sont ensuite assemblés à nouveau forment un palier de rotation du maneton selon un axe horizontal (A1),
caractérisé en ce que, la forme d'au moins une amorce (36, 38) et/ou l'agencement des deux amorces (36, 38) l'une par rapport à l'autre permettent de réaliser des zones de rupture (40, 42) qui constituent des moyens de détrompage de la positon du chapeau (26) par rapport au corps (16) en vue de leur assemblage.

## Description

L'invention propose une bielle de transmission.

L'invention propose plus particulièrement une bielle de transmission du mouvement de translation d'un piston d'un moteur à combustion à un vilebrequin.

Dans la plupart des moteurs à combustion, les mouvements de translation des pistons dus à l'énergie mécanique qui résulte de l'explosion du mélange carburé dans les chambres de combustion sont transmis à un vilebrequin par l'intermédiaire de bielles.

Une extrémité de chaque bielle, appelée pied de bielle, est reliée à l'axe du piston correspondant et l'autre extrémité, appelée tête de bielle, est montée à rotation sur un élément cylindrique du vilebrequin appelé maneton.

Le pied et la tête de la bielle comportent chacun un trou transversal qui présente une paroi tubulaire interne formant ainsi un palier de rotation de l'axe du piston et du maneton du vilebrequin respectivement. Les efforts transmis par les bielles sont très importants.

Les manetons sont reliés entre eux par des flasques sensiblement transversaux et leurs axes de révolution sont excentrés par rapport à l'axe de rotation du vilebrequin. Ainsi, lorsque les axes du pied de bielle, du maneton et de rotation du vilebrequin ne sont pas alignés, les efforts de chaque bielle sur le maneton correspondant provoquent un couple qui met en mouvement le vilebrequin.

Les bielles de transmission peuvent par exemple être réalisées en acier forgé ou en fonte.

De façon à permettre la formation du palier de rotation du maneton du vilebrequin, la tête de bielle doit comporter deux parties distinctes, l'une formant un chapeau d'extrémité l'autre, formant le corps de la bielle pour l'assemblage du palier sur le maneton correspondant.

La bielle peut aussi être réalisée en deux parties distinctes.

Ensuite, ces deux parties sont assemblées, par exemple par un assemblage vis-écrou, autour du maneton du vilebrequin de façon à former le palier de rotation.

Cependant, une telle réalisation ne permet pas l'obtention d'un résultat satisfaisant. En effet, l'orientation cristalline de la matière des deux parties ne permet pas une résistance optimale de la bielle lors du fonctionnement du moteur.

Pour résoudre ce problème, il est connu de réaliser la tête en une seule pièce et de la séparer ensuite en un chapeau et un corps selon un plan diamétral. La séparation peut être obtenue par un usinage tel que le sciage ou la découpe laser.

Le chapeau et le corps sont ensuite assemblés à nouveau et forment un palier de rotation du vilebrequin selon un axe horizontal.

Lors de l'assemblage de la bielle, le chapeau est précontraint sur le corps de façon à s'assurer de la rigidité de la bielle. En effet, la présence de jeu entre les deux parties provoque le matage des faces en contact et la détérioration rapide de la bielle.

Pour assurer une résistance optimale de la bielle lors de son fonctionnement, il est aussi nécessaire que la position relative du chapeau et du corps, lorsqu'ils sont assemblés, soit définie avec précision et soit identique à leur position l'un par rapport à l'autre avant leur séparation.

Dans ce but, il est connu d'insérer des pions de positionnement et de détrompage dans les zones usinées.

L'insertion des pions nécessite la réalisation d'usinages supplémentaires qui augmentent les coûts de production de la bielle.

La séparation en deux de la tête de bielle peut aussi être obtenue par rupture mécanique. Cela consiste à réaliser deux amorces de rupture, sur la paroi tubulaire interne du trou transversal de l'extrémité, qui sont destinées à déterminer deux zones de rupture pour séparer le chapeau et le corps selon le plan diamétral de rupture.

La séparation de la tête de la bielle par rupture est moins onéreuse car elle est plus rapide et nécessite un outillage moins important que pour la séparation par usinage.

Cependant, on retrouve le problème du positionnement du chapeau et du corps. La solution qui consiste à insérer des pions provoque un surcoût de production important car la séparation ne nécessitant pas d'usinage, il faut prévoir des machines supplémentaires spécifiques.

La position relative du chapeau par rapport au corps est d'autant plus importante, lorsque la séparation est obtenue par rupture, que les formes des profils des faces de rupture du chapeau et du corps ne sont pas planes. Elles présentent des pics et des creux dont la répartition, due à la structure cristalline du matériau de la bielle, est irrégulière.

Ainsi, si le chapeau est décalé ou est pivoté de 180° par rapport sa position de séparation, les pics et les creux des faces de rupture du chapeau ne sont pas en vis à vis des creux et des pics des faces de rupture du corps.

Lors du fonctionnement du moteur, les efforts importants transmis par la bielle occasionnent des contraintes élevées dans les zones de contact du chapeau et du corps. Ces contraintes élevées provoquent un matage des pics, ce qui diminue la précontrainte et peu donner naissance à des jeux qui sont préjudiciables à la rigidité de la bielle, ainsi qu'à son bon fonctionnement.

De façon à résoudre ce problème l'invention propose une bielle de transmission du mouvement de translation d'un piston d'un moteur à combustion à un vilebrequin, du type qui comporte une tête qui est réalisée en une seule pièce et qui comporte deux amorces de rupture sur sa paroi tubulaire interne qui sont destinées à déterminer deux zones de rupture pour séparer un chapeau inférieur et un corps supérieur selon un plan diamétral de rupture qui, lorsqu'ils sont ensuite assemblés à nouveau forment un palier de rotation du maneton du vilebrequin selon un axe horizontal,
caractérisé en ce que, la forme d'au moins une amorce et/ou l'agencement des deux amorces l'une par rapport à l'autre permettent de réaliser des zones de rupture qui constituent des moyens de détrompage de la positon du chapeau par rapport au corps en vue de leur assemblage.

Selon d'autres caractéristiques de l'invention :
- les deux amorces de rupture sont décalées verticalement l'une par rapport à l'autre ;
- les formes des amorces de ruptures sont dissymétriques par rapport à l'axe vertical médian de la tête de la bielle ;
- l'une au moins des amorces de rupture est dissymétrique par rapport à un plan vertical médian de la tête de la bielle qui est perpendiculaire à l'axe de rotation du palier ;
- l'une au moins des amorces de rupture comporte au moins deux portions planes dont l'une au moins est inclinée par rapport au plan horizontal ;
- au moins une des amorces a la forme d'un V dont les deux branches sont dissymétriques.

D'autres caractéristiques et avantages de l'invention apparaîtront à la lecture de la description détaillée qui suit pour la compréhension de laquelle on se reportera aux dessins annexés dans lesquels :
- la figure 1 représente de façon schématique une bielle de transmission dans la paroi tubulaire interne de laquelle sont réalisées deux amorces de rupture selon l'état de la technique ;
- la figure 2 représente à grande échelle une partie de la bielle de transmission dans laquelle est réalisée l'une des amorces de rupture ;
- la figure 3 représente de façon schématique une bielle dont la tête est séparée par rupture en deux parties formant chapeau et corps ;
- la figure 4 représente à grande échelle les profils de rupture en vis à vis du chapeau et du corps ;
- la figure 5 représente la tête d'une bielle dont les amorces de rupture sont réalisées selon un premier mode de réalisation de l'invention ;
- la figure 6 représente la tête de la bielle représentée à la figure précédente après la séparation du chapeau et du corps ;
- la figure 7 est une vue en coupe longitudinale selon un plan vertical médian de la bielle sur la paroi tubulaire interne de laquelle est réalisée une amorce de rupture selon un deuxième mode de réalisation de l'invention ;
- la figure 8 est une vue en perspective de la bielle représentée à la figure précédente après la séparation du chapeau et du corps ;
- la figure 9 est une vue en coupe longitudinale partielle selon un plan vertical médian de la tête de la bielle représentée à la figure 7, le chapeau ayant été pivoté de 180° par rapport à sa position de séparation.

Dans le but de faciliter la compréhension à description, on utilisera, à titre non limitatif, une orientation de haut en bas ainsi que des orientations horizontale et verticale conformément aux figures.

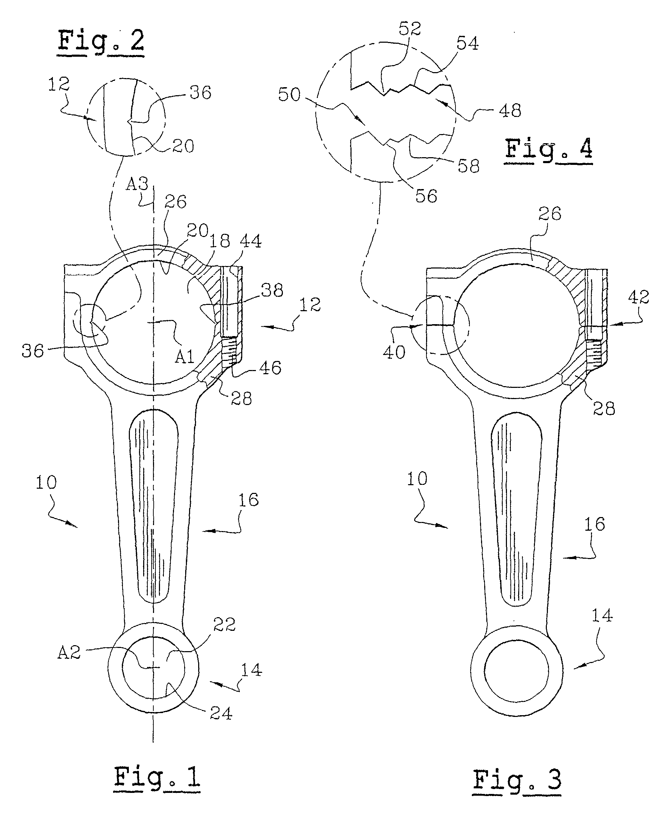

La figure 1 représente une bielle 10 de transmission de mouvement réalisée en métal, notamment en acier forgé ou en fonte coulée sous pression.

La bielle 10 se compose principalement d'une tête 12 et d'un pied 14 qui sont reliés entre eux par une partie du corps 16 de la bielle 10.

La tête 12 comporte un trou 18 qui présente une paroi tubulaire interne 20 d'axe A1 transversal et qui est destiné à former un palier de rotation pour un maneton d'un vilebrequin (non représenté).

De façon similaire, le pied 14 comporte un trou 22 qui présent une paroi tubulaire interne 24 d'axe A2 transversal et qui est destiné à former un palier de rotation pour un axe de piston (non représenté).

Les axes A1, A2 des trous 18 et 24 sont ici alignés verticalement. Selon des variantes, sans sortir du cadre de l'invention, les axes A1, A2 peuvent être décalés par rapport à l'axe longitudinal A3 du corps 16 de la bielle qui est ici, par convention, d'orientation verticale.

On définit ainsi un axe vertical médian A3 qui correspond à l'axe vertical qui coupe les axes A1, A2 et qui appartient au plan P1 vertical médian de la bielle 10 qui est perpendiculaire aux axes A1, A2.

L'axe de piston est généralement un cylindre qui traverse au moins partiellement le piston. Par conséquent, il est assemblé avec la bielle 10 par introduction transversale selon l'axe A2 dans le trou 22.

L'assemblage du maneton du vilebrequin est plus compliqué. En effet, chaque extrémité libre du maneton est reliée à un flasque du vilebrequin. Par conséquent, il ne peut être engagé par translation à l'intérieur du trou 18.

Ainsi, de façon connue, la tête 12 de la bielle 10 est séparée en deux parties qui sont le chapeau 26 de la bielle et l'extrémité libre supérieure 28 du corps 16.

Une technique simple et économique consiste à réaliser dans la paroi tubulaire 20 deux amorces de rupture 36, 38 qui sont diamétralement opposées par rapport à l'axe A1.

Les amorces de rupture 36, 38 correspondent en général à des petites rainures de quelques dixièmes de millimètres de profondeur qui sont réalisée dans la paroi tubulaire 20.

Les amorces de rupture 36, 38 peuvent être réalisées par usinage de la tête 16 de la bielle 10 dans un plan horizontal qui contient l'axe A1 du trou 18.

Elles peuvent aussi être réalisées par transformation locale de la structure cristalline du matériau de la bielle, notamment par chauffage qui peut être obtenu par un rayonnement laser.

Ensuite, la bielle 10 est disposée dans un dispositif de rupture qui provoque des efforts de direction longitudinale opposée sur le chapeau 26 et l'extrémité libre supérieure 28 du corps 16 respectivement. L'intensité des efforts est supérieure à la limite de rupture du matériau qui constitue la bielle 10, de façon à séparer le chapeau 26 de l'extrémité libre supérieure 28 selon deux zones de rupture 40, 42 correspondants aux amorces de rupture 36, 38.

Un dispositif de rupture connu peut être constitué de deux demi-cylindres qui sont agencés dans le trou 20 respectivement en vis à vis du chapeau 26 et de l'extrémité libre supérieure 28 du corps 16. Un coin de profil globalement tronconique est inséré selon l'axe A1 entre les deux demi-cylindres. Puis un effort, qui est avantageusement un choc, est appliqué selon la direction de l'axe A1 sur une face du coin, de façon qu'il provoque l'écartement des deux demi-cylindres et la rupture de la tête 12 de la bielle 10.

Pour permettre l'assemblage ultérieur du chapeau 26 et du corps 28 de la bielle, il est prévu des dispositifs de fixation qui peuvent consister en deux vis (non représentées) qui s'engagent chacune, de haut en bas, dans un perçage longitudinal 44 réalisé dans les parties latérales du chapeau 26 agencés de part et d'autre du trou 18 et dont les parties filetées coopèrent avec des taraudages 46 réalisés dans le prolongement des perçages 44 dans l'extrémité supérieur 28 du corps 16 de la bielle 10.

L'assemblage de la bielle 10 avec un maneton du vilebrequin du moteur consiste alors à assembler à nouveau le chapeau 26 sur l'extrémité libre 28 du corps 16 de la bielle 10, le maneton étant situé dans le trou 18.

De façon à assurer un fonctionnement optimal de la bielle 10, le chapeau 26 et l'extrémité libre 28 sont précontraints par les dispositifs de fixation. Cela permet de former un palier de rotation du maneton sur le vilebrequin dont la déformation est limitée, même lorsque la bielle 10 transmet des efforts importants entre l'axe du cylindre et le maneton du vilebrequin.

Cependant, la séparation du chapeau supérieur 26 et du corps 16 de la bielle provoque la formation de deux zones de rupture 40, 42 qui sont situées de part et d'autre du trou 18 et dont chacune est constituée de deux faces 48 et 50 appartenant au chapeau 26 et au corps 16 de la bielle 10 respectivement.

Le faciès ou profil d'une face 48 est constitué de pics 52 et de creux 54 qui sont en vis à vis de creux 56 et de pics 58 complémentaires du profil de la face 50 correspondante. Les pics et les creux résultent notamment de la structure cristalline du matériau constituant la bielle.

La rupture se propage selon une direction sensiblement perpendiculaire à l'effort de rupture. Cependant elle suit plus particulièrement les plans de joint entre les cristaux dont la forme et la répartition sont irrégulières.

Lorsque le chapeau 26 est assemblé à nouveau avec le corps 16, 28 de la bielle 10, la position des faces 48 par rapport aux faces 50 des deux zones de rupture 40, 42 doit correspondre exactement à la position relative de ces faces lors de la séparation. En effet, si ce n'est pas le cas, des pics 52 des faces 48 peuvent être en contact avec des pics 58 des faces 50. Cela crée des zones dans lesquelles les contraintes lors du fonctionnement du moteur sont très largement supérieures à la contrainte de déformation plastique du matériau. Cela provoque le matage de ces zones.

Ce phénomène est préjudiciable au fonctionnement de la bielle 10 puisqu'il diminue la valeur de la précontrainte. Il peut même dans certains cas provoquer la formation d'un jeu entre les faces 48 et 50 du chapeau 26 et de l'extrémité libre 28 du corps 16 de la bielle 10.

Le mauvais positionnement relatif des faces 48 et 50 peut être dû à un léger décalage du chapeau 26 par rapport au corps 16 de la bielle 10. En général, l'opérateur chargé de l'assemblage s'aperçoit de ce décalage car les faces extérieures du chapeau 26 et les faces extérieures de l'extrémité libre 28 ne sont pas alignées entre elles à proximité des zones de rupture 40, 42.

Le mauvais positionnement relatif des faces 48 et 50 peut aussi être dû à un pivotement du chapeau 26 de 180° par rapport à l'axe vertical A3. Dans ce cas, bien que les faces extérieures du chapeau 26 et les faces extérieures de l'extrémité libre 28 soient alignées entre elles à proximité des zones de rupture 40, 42, les pics 52 et les creux 54 d'une face 48 ne correspondent absolument pas avec les creux 56 et les pics 58 de la face 50 en vis à vis.

De façon à supprimer le risque de mauvais positionnement des faces 48 et 50, l'invention propose selon un premier mode de réalisation que l'agencement des deux amorces 36, 38 l'une par rapport à l'autre permettent de réaliser des zones de rupture 40, 42 qui constituent des moyens de détrompage de la positon du chapeau 26 par rapport au corps 16 en vue de leur assemblage.

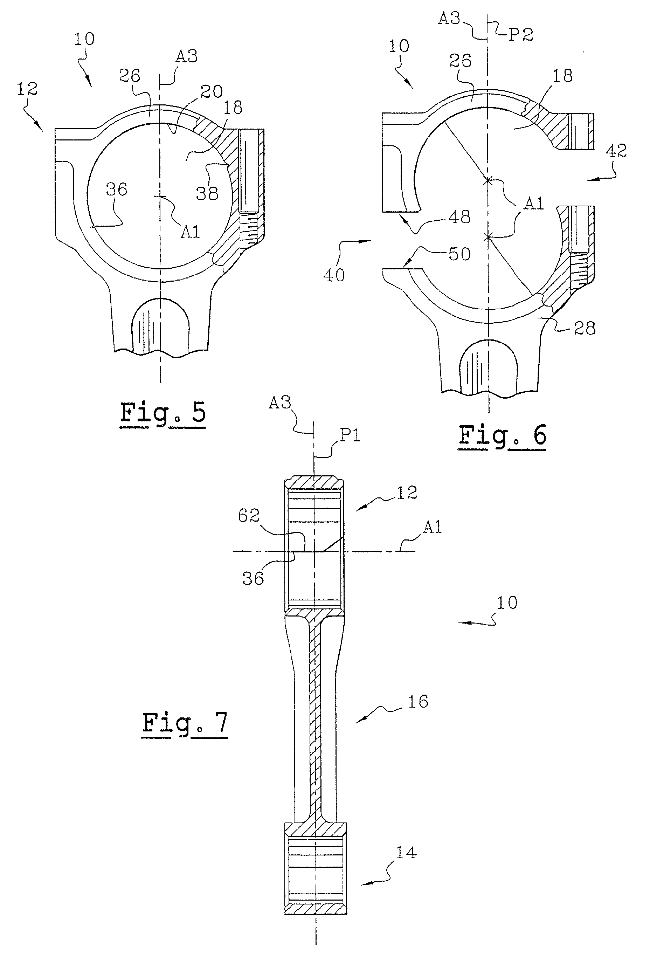

Une telle réalisation est représentée aux figures 5 et 6.

Les deux amorces 36, 38 sont diamétralement opposées dans la paroi tubulaire interne 20 du trou 18 et elles sont décalées verticalement l'une par rapport à l'autre.

Ainsi, conformément à la figure 6 le chapeau 26 est dissymétrique par rapport un plan vertical P2 qui contient l'axe A1 du trou 18.

Cela permet de réaliser des moyens de détrompage de la position du chapeau 26 par rapport au corps.

En effet, si entre la séparation du chapeau 26 et son assemblage sur le corps 16 de la bielle, le chapeau 26 pivote de 180°, autour de l'axe vertical médian A3, l'opérateur chargé de l'assemblage s'aperçoit immédiatement de ce pivotement. De plus, dans le cas où l'opérateur est distrait, la forme du chapeau 26 rend l'assemblage impossible.

Selon un deuxième mode de réalisation de l'invention, la forme de l'amorce 36 permet de réaliser une zone 40 de rupture qui constitue des moyens de détrompage de la positon du chapeau 26 par rapport au corps 16 en vue de leur assemblage.

Ce mode de réalisation est représenté aux figures 7 à 9. Ici, les formes des amorces de ruptures 36 et 38 sont dissymétriques par rapport à l'axe vertical médian A3 de la tête 12 de la bielle 10.

L'amorce 36 de rupture est ici dissymétrique par rapport à au plan vertical médian P1 de la tête 12 de la bielle 10. Elle comporte deux portions 62 et 64. La première portion 62 est horizontale, sensiblement conformément à l'état de la technique et la seconde portion 64 est inclinée par rapport au plan horizontal.

L'amorce de rupture 38 s'étend dans le plan horizontal qui passe par l'axe A1.

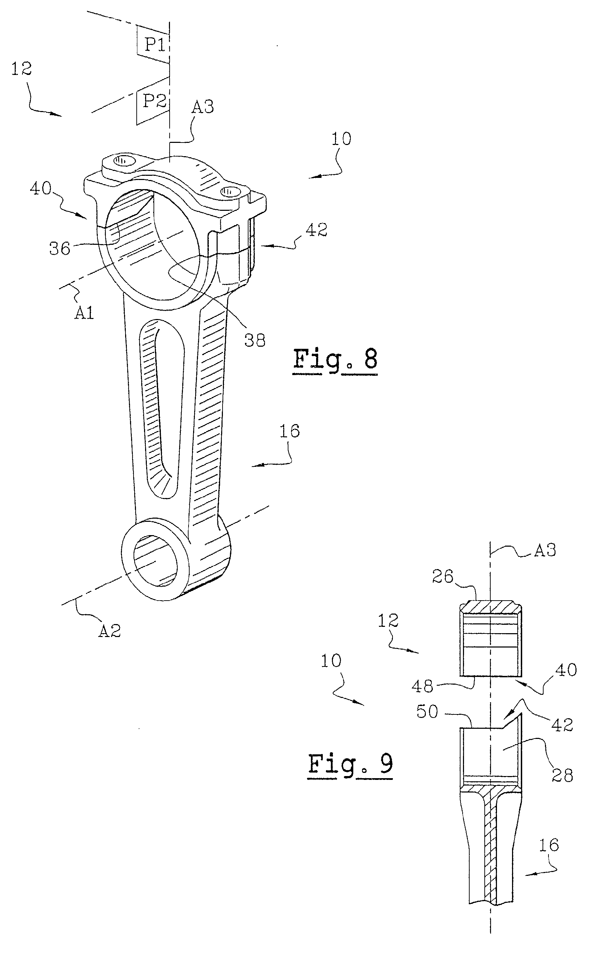

Ainsi, conformément à la figure 8, lorsque le chapeau 26 et le corps 16 sont séparés, la zone de rupture 40 correspondant à l'amorce 36 et l'autre zone de rupture 42 présentent des profils qui sont dissymétriques par rapport à l'axe vertical médian A3. La forme de la face 48 du chapeau 26 de la zone de rupture 40 n'est pas complémentaire de la forme de la face 50 du corps 16 de la zone de rupture 42, conformément à la figure 9. Tout risque d'erreur de positionnement du chapeau par rapport au corps 16 est ainsi supprimé.

Selon une variante, l'une des amorces de rupture 36, 38 a la forme d'un V dont les deux branches sont dissymétriques.

Il faut aussi comprendre par forme de l'amorce de rupture, son orientation par rapport au plan horizontal. En effet, l'invention concerne aussi une bielle dont une amorce de rupture rectiligne est inclinée par rapport au plan horizontal. La caractéristique de l'invention étant que l'une au moins des zones de rupture 40, 42 constitue des moyens de détrompage de la position du chapeau 26 par rapport au corps 16 en vue de leur assemblage.

La description qui précède n'est pas limitative en effet, il est possible par exemple de combiner les deux modes de réalisation sans sortir du cadre de l'invention.

## Revendications

1. Bielle (10) de transmission du mouvement de translation d'un piston d'un moteur à combustion à un vilebrequin, du type qui comporte une tête (12) qui est réalisée en une seule pièce et qui comporte deux amorces (36, 38) de rupture sur sa paroi (20) tubulaire interne qui sont destinées à déterminer deux zones (40, 42) de rupture pour séparer un chapeau supérieur (26) et un corps (16) selon un plan diamétral de rupture qui, lorsqu'ils sont ensuite assemblés à nouveau forment un palier de rotation du maneton du vilebrequin selon un axe horizontal (A1),
**caractérisé en ce que**, la forme d'au moins une amorce (36, 38) et/ou l'agencement des deux amorces (36, 38) l'une par rapport à l'autre permettent de réaliser des zones de rupture (40, 42) qui constituent des moyens de détrompage de la positon du chapeau (26) par rapport au corps (16) en vue de leur assemblage.

2. Bielle (10) de transmission selon la revendication précédente, **caractérisé en ce que** les deux amorces (36, 38) de rupture sont décalées verticalement l'une par rapport à l'autre.

3. Bielle (10) de transmission selon des revendications 1 ou 2, **caractérisé en ce que** les formes des amorces (36, 38) de ruptures sont dissymétriques par rapport à l'axe vertical médian (A3) de la tête (12) de la bielle (10).

4. Bielle (10) de transmission selon l'une quelconque des revendications précédentes, **caractérisé en ce que** l'une au moins des amorces (36, 38) de rupture est dissymétrique par rapport à un plan vertical médian (P) de la tête (12) de la bielle (10) qui est perpendiculaire à l'axe de rotation (A1) du palier.

5. Bielle (10) de transmission selon la revendication précédente, **caractérisé en ce que** l'une au moins des amorces (36, 38) de rupture comporte au moins deux portions planes (62, 64) dont l'une au moins est inclinée par rapport au plan horizontal.

6. Bielle (10) de transmission selon la revendication précédente, **caractérisé en ce qu'**au moins une des amorces (36, 38) de rupture a la forme d'un V dont les deux branches sont dissymétriques.
